(19) Europäisches Patentamt
European Patent Office
Office européen des brevets

(11) Veröffentlichungsnummer: **0 295 534**
**A2**

(12) **EUROPÄISCHE PATENTANMELDUNG**

(21) Anmeldenummer: 88109035.1

(22) Anmeldetag: 07.06.88

(51) Int. Cl.4: **C08K 5/15 , C08L 27/06**

(30) Priorität: 15.06.87 DE 3719970

(43) Veröffentlichungstag der Anmeldung:
**21.12.88 Patentblatt 88/51**

(84) Benannte Vertragsstaaten:
**AT BE CH DE ES FR GB GR IT LI LU NL SE**

(71) Anmelder: **NEYNABER CHEMIE GmbH**
**Am Wedenberg Postfach 11 20**
**D-2854 Loxstedt(DE)**

(72) Erfinder: **Worschech, Kurt, Dr.**
**Alte Strasse 4**
**D-2854 Loxstedt-Bexhövede(DE)**
Erfinder: **Fleischer, Erwin**
**Dwarsweg 1**
**D-2858 Schiffdorf(DE)**
Erfinder: **Eierdanz, Horst, Dr.**
**Verbindungsstrasse 5**
**D-4010 Hilden(DE)**
Erfinder: **Wedl, Peter**
**Löningstrasse 13**
**D-2850 Bremerhaven(DE)**
Erfinder: **Jaeckel, Manfred**
**Memeler Strasse 29**
**D-2854 Loxstedt(DE)**
Erfinder: **Löffelholz, Frido**
**Vieländer Weg 226 f**
**D-2850 Bremerhaven-Surheide(DE)**

(54) **Verwendung von bei Umgebungstemperatur festen Epoxiden von Ethylenglykoldiestern als Stabilisatoren bzw. Costabilisatoren für Kunststoffe.**

(57) Die Verwendung von bei Umgebungstemperatur fester Epoxide von Ethylenglykoldiestern technischer Mischungen ungesättigter Monocarbonsäuren mit hohem Gehalt an einfach ungesättigten $C_{18}$- bis $C_{22}$-Monocarbonsäuren als Stabilisatoren bzw. Costabilisatoren für Kunststoffe auf Basis von PVC oder PVC-Copolymerisaten, insbesondere Hart-PVC führt zu günstigen Eigenschaften in den Kunststoffen und bei der Herstellung von Metallseifen enthaltenden Costabilisator-Kombinationen, wenn die Epoxide durch Epoxidation der Glykoldiester von Mischungen von Monocarbonsäuren der folgenden Zusammensetzung hergestellt sind:

a) mindestens 80 Gew.-% einer der Monocarbonsäuren aus der von einfach ungesättigten $C_{18}$- bis $C_{22}$-Fettsäuren gebildeten Gruppe und

b) höchstens 20 Gew.-% Monocarbonsäuren, ausgewählt aus der von gesättigten, anderen einfach ungesättigten und mehr als einfach ungesättigten $C_{14}$-$C_{22}$-Fettsäuren gebildeten Gruppe, wobei der Gehalt an mehr als einfach ungesättigten Monocarbonsäuren höchstens 9 Gew.-% beträgt.

## Verwendung von bei Umgebungstemperatur festen Epoxiden von Ethylenglykoldiestern als Stabilisatoren bzw. Costabilisatoren für Kunststoffe.

Die Erfindung betrifft die Verwendung von bei Umgebungstemperatur festen Epoxiden von Ethylenglykoldiestern technischer Mischungen ungesättigter Monocarbonsäuren mit hohem Gehalt an einfach ungesättigten $C_{18}$- bis $C_{22}$-Monocarbonsäuren als Stabilisatoren bzw. Costabilisatoren für Kunststoffe auf Basis von PVC oder PVC-Copolymerisaten, insbesondere Hart-PVC sowie Stabilisator- bzw. Costabilisator-Kombinationen für die genannten Kunststoffe, die die erfindungsgemäß zu verwendenden Epoxide und Metallseifen enthalten.

Technisch verwendete Fettepoxide, z.B. epoxidierte Öle wie Sojabohnenöl, Leinöl oder Sonnenblumenöl sowie epoxidierte Fettsäureester einwertiger Alkohole - sogenannte Alkylepoxistearate - weisen eine flüssige Konsistenz auf. Da sie wegen ihrer guten Verträglichkeit in PVC auch weichmachende Eigenschaften haben, werden sie auch normalerweise als Epoxyweich macher bezeichnet. Sie werden jedoch relativ selten als echte Weichmacher eingesetzt, da normale Primärweichmacher vom Phthalattyp billiger sind. Der Einsatz als Weichmacher spielt in der Regel jedoch nur dort eine Rolle, wo es um eine Wanderungsresistenz geht.

Die genannten Fettepoxide werden in erster Linie als Costabilisatoren verwendet, hauptsächlich gemeinsam mit stabilisierenden Metallseifen, also neben BaCd- oder BaCdZn- oder BaZn- sowie CaZn-Systemen. Solche Metallseifen können eine flüssige oder auch feste Konsistenz aufweisen. In der Weich-PVC-Verarbeitung werden meistens die weichmacherkompatiblen Flüssigsysteme verwendet, in der Hart-PVC-Verarbeitung werden ausschließlich feste stabilisierende Metallseifen eingesetzt.

Die Verwendung flüssiger Additive in der Hart-PVC-Verarbeitung ist nachteilig. Flüssige Additive, Stabilisatoren bzw. Gleitmittel können bereits bei Normaltemperatur eine erweichende Wirkung entfalten bzw. zum Ausschwitzen neigen. Sie weisen ferner den Nachteil auf, daß sie sich selten mit den festen Rezepturpartnern zu sogenannten Mastercompounds oder "one packs" compoundieren lassen. Es hat daher nicht an Versuchen gefehlt, feste Epoxide als Costabilisatoren zu entwickeln, durch die die genannten Nachteile ausgeschlossen werden können. So ist beispielsweise das Epoxid des Di-stearyl-tetrahydrophthalats eingesetzt worden, das zwar in fester Form vorliegt, jedoch für einen wirksamen Costabilisator einen zu niedrigen Oxirangehalt besitzt. Zudem ist das Produkt für den technischen Einsatz zu teuer.

Es wurde nun gefunden, daß die Epoxide von Estern des Ethylenglykols mit einfach ungesättigten Fettsäuren in Form ihrer Mischungen, wie sie aus fetten Ölen pflanzlicher Herkunft erhalten werden, fest sind und sich normal über Schuppenwalzen oder Sprühtürme zu nicht backenden, frei fließenden Produkten konfektionieren lassen.

Die erfindungsgemäß einzusetzenden Epoxide können durch Epoxidation der Glykoldiester von Mischungen von Monocarbonsäuren der folgenden Zusammensetzung hergestellt werden:

a) mindesten 80 Gew.-% einer der Monocarbonsäuren aus der von einfach ungesättigten $C_{18}$- bis $C_{22}$-Fettsäuren gebildeten Gruppe, und

b) höchstens 20 Gew. % Monocarbonsäuren, ausgewählt aus der von gesättigten, anderen einfach ungesättigten und mehr als einfach ungesättigten $C_{14}$-$C_{22}$-Fettsäuren gebildeten Gruppe, wobei der Gehalt an mehr als einfach ungesättigten Monocarbonsäuren höchstens 9 Gew.-% beträgt.

Die erfindungsgemäß zu verwendenden festen Epoxide können für die PVC-Hart-Verarbeitung als maßgeschneidert angesehen werden. Sie sind fest und rieselfähig und verschlechtern auch bei hoher Dosierung nicht die Rieselfähigkeit von PVC-dry blends für die Hart-Verarbeitung. Sie zeigen ausgezeichnete costabilisierende Eigenschaften und sind hier in ihrer Wirkung mit jedem guten Epoxisojaöl vergleichbar. Sie lassen sich mit festen CaZn- bzw. BaCd-Seifen zu "one packs" konfektionieren und helfen bei der Bindung staubender bzw. toxischer Metallseifen und bei der Umwandlung derselben in staubarme oder staubfreie Granulate. Dies ist besonders bei der Entstaubung des festen BaCd-Komplexes von Bedeutung.

Gemäß einer bevorzugten Ausführungsform der Erfindung enthalten die Mischungen der Monocarbonsäuren mindesten 80 Gew.-% einer der Monocarbonsäuren aus der von Ölsäure und Erucasäure gebildeten Gruppe. Vorzugsweise beträgt der Höchstgehalt an diesen Monocarbonsäuren 95 Gew.-%.

Gemäß einer weiteren vorteilhaften Ausführungsform der Erfindung weisen die Mischungen der Monocarbonsäuren die folgende Zusammensetzung auf:

a) 80 bis 92 Gew.-% Ölsäure,

b) Rest (auf 100 %) 4 bis 10 Gew.-% gesättigte $C_{16}$/$C_{18}$-Fettsäuren, höchstens 7 Gew.-% Linolsäure sowie weniger als 1 Gew.-% andere $C_{14}$/$C_{22}$-Fettsäuren.

Ein technisches Monocarbonsäuregemisch dieser Zusammensetzung läßt sich aus fetten Ölen spezieller Helianthus annuus-Sorten gewinnen, wie sie z.B. in der US-PS 4 627 192 beschrieben sind.

Alternativ können die Mischungen der Monocarbonsäuren bevorzugt die folgende Zusammensetzung aufweisen;

a) 86 bis 92 Gew.-% Erucasäure,

b) Rest (auf 100 %) mindestens 2 Gew.-% gesättigte $C_{16}/C_{18}$-Fettsäuren, höchstens 9 Gew.-% Linolsäure und/oder Eikosensäure sowie weniger als 1 Gew.-% anderer $C_{14}/C_{22}$-Fettsäuren.

Ein Monocarbonsäuregemisch der vorgenannten Zusammensetzung kann aus bestimmten Raps- oder Rübsen-Sorten (Brassica napus oder rapa) erhalten werden.

Entsprechend der pflanzlichen Herkunft der erfindungsgemäß einzusetzenden Monocarbonsäuremischungen bezieht sich der hier verwendete Begriff "Monocarbonsäuren" auf Monocarbonsäuren mit gerader Kohlenstoffzahl.

Die erfindungsgemäß zu verwendenden festen Epoxide werden letztlich aus pflanzlichen Naturprodukten erhalten, so daß sie hinsichtlich der Zusammensetzungen ihrer Bestandteile gewissen Schwankungen unterliegen. Üblicherweise für die Erfindung geeignete feste Epoxide können vorzugsweise aus fetten Ölen exHelianthus annuus hergestellt werden, die hinsichtlich ihrer Hauptkomponenten die folgenden Zusammensetzungen aufweisen:

| | |
|---|---|
| Ölsäure | 78 bis 92 Gew.-% |
| Linolsäure | 2 bis 10 Gew.-% |
| Palmitinsäure | 2 bis 5 Gew.-% |
| Stearinsäure | 2 bis 7 Gew.-%, |

wobei sich der Gehalt an Linol-, Palmitin- und Stearinsäure zusammen mit dem Ölsäuregehalt auf 100 Gew.-% ergänzt.

Die entsprechenden Werte für fette Öle, die aus den vorgenannten Brassica-Sorten gewonnen werden, sind wie folgt:

| | |
|---|---|
| Erucasäure | 86 - 96 Gew-% |
| Ölsäure | 0 - 5 Gew.-% |
| Linolsäure | 0,0 - 0,5 Gew.-% |
| Palmitinsäure | 0 - 3 Gew.-% |
| Stearinsäure | 0 - 3 Gew.-% |
| Eikosensäure | 0 - 8 Gew.-% |

wobei sich der Gehalt an Öl-, Linol-, Palmitin- und Stearinsäure zusammen mit dem Erucasäuregehalt auf 100 Gew.-% ergänzt.

Gemäß einer bevorzugten Ausführungsform der Erfindung werden feste Epoxide auf Basis von überwiegend Ethylenglykol-dioleat eingesetzt, die mindestens Oxirangehalte von 4,3 % aufweisen.

Gemäß einer weiteren vorteilhaften Ausführungsform der Erfindung werden Epoxide auf Basis von überwiegend Ethylenglykoldibehenat verwendet, die mindestens Oxirangehalte von 3,5 % aufweisen.

Die Erfindung ist weiterhin auf Stabilisator bzw. Costabilisator-Kombinationen für Kunststoffe auf Basis von PVC oder PVC-Copolymerisaten, insbesondere Hart-PVC, gerichtet, die die erfindungsgemäß zu verwendenden Epoxide oder Mischungen derselben mit Oxirangehalten von mindestens 3,6 % zusammen mit Metallseifen, deren Metallkomponente aus der von Ba, Cd, Zn, Ca, Mg, Al, Pb und Sb gebildeten Gruppe sowie gegebenenfalls zugesetzte Pigmente und übliche Kunststoffhilfsmittel.

Die Metallkomponente kann, wie in der PVC-Verarbeitung üblich, auch Metallkombinationen wie BaCd, BaZn, CaZn oder BaCdZn einschließen. Typische Beispiele für einsetzbare Metallseifen sind die folgenden Salze des Bariums, Cadmiums, Zinks und Calciums mit gesättigten, geradkettigen Säuren der Kettenlänge $C_{12}$-$C_{22}$, insbesondere mit Laurinsäure, Myristinsäure und Stearinsäure, weiterhin Salze der Benzoesäure und schließlich verzweigte Octoate des Calcium und Zinks auf der Basis der 2-Ethylhexansäure. Weiterhin zu nennen sind Verbindungen der Isopalmitin- und Isostearinsäure. Schließlich können auch Bleiverbindungen wie die als Primärstabilisatoren bekannten basischen Bleisulfate und basisches Bleiphosphit, weiterhin 28 %-iges und 51 %-iges Bleistearat. Schließlich können die festen Epoxide durchaus auch neben Zinn- und Antimonstabilisatoren eingesetzt werden.

Die erfindungsgemäß einzusetzenden Epoxide der Erfindung werden den Kunststoffen auf Basis von PVC oder PVC-Copolymerisaten, insbesondere Hart-PVC, in einer Menge von 0,1 bis 5, vorzugsweise 0,5 bis 2,5 Gew.-Teilen auf 100 Gew.-Teile Kunststoff, zugesetzt.

Die Erfindung wird im folgenden anhand von bevorzugten Ausführungsbeispielen näher erläutert.

1. Herstellung der erfindungsgemäß einzusetzenden Epoxide.

A. Ethylenglykol-di-oleat.

Aus einem fetten Öl einer Helianthus annuus-Sorte mit der folgenden, gaschromatisch ermittelten Zusammensetzung

| | |
|---|---|
| Myristinsäure | 0,1 Gew.-% |
| Palmitinsäure | 3,1 Gew.-% |
| Stearinsäure | 2,0 Gew.-% |
| Ölsäure | 86,2 Gew.-% |
| Linolsäure | 7,8 Gew.-% |
| Linolensäue | 0,2 Gew.-% |
| Arachinsäure | 0,2 Gew.-% |
| Eikosensäure | 0,2 Gew.-% |
| Erucasäure | 0,2 Gew.-% |

wurde auf üblichem Wege durch Fettspaltung und einfache, d.h. nicht fraktionierende Destillation ein Fettsäuregemisch der entsprechenden Zusammensetzung erhalten.

In einem Dreihalskolben mit Rührer, Thermometer und absteigendem Liebigkühler wurden 397,6 g (1,4 Mol) des genannten Fettsäuregemisches, 47,9 g Ethylenglykol (0,7 Mol + 10 % Überschuß) und 0,2 g Zinnstaub gegeben. Die Mischung wurde unter Rühren auf 160° C erhitzt und von da ab innerhalb von 2 Stunden auf 200° C weiter aufgeheizt. Ab 160° C setzte die Wasserabscheidung ein. Nach dem Erreichen von 210° C wurde ein leichtes Vakuum angelegt, das ständig verstärkt wurde. Nach einer Reaktionszeit von 5 bis 6 Stunden war die Säurezahl auf ca. 0,5 abgefallen. Die Reaktionsmischung wurde auf 80° C abgekühlt, gebleicht und filtriert. Man erhielt ein blankes, hellgelbes Öl mit einem Trübungspunkt von 14° C, das sich nach kurzzeitigem Stehen schwach eintrübte.

B. Ethylenglykol-di-erucat.

Aus einem Rapsöl mit der folgenden Zusammensetzung:
Palmitinsäure        1,0 %
Stearinsäure         1,0 %
Ölsäure        3,0 %
Eikosensäure       5,0 %
Erucasäure        90,0 %
wurde durch übliche Fettspaltung und Destillation ein Fettsäuregemisch der entsprechenden Zusammensetzung erhalten.

Nach der Arbeitsweise der Vorschrift A wurden 1204 g dieses Fettsäuregemisches (3,52 Mol), 120 g Ethylenglykol (1,76 Mol + 10 % Überschuß) und 0,7 g Zinnstaub umgesetzt. Nachdem die Säurezahl auf 0,5 abgefallen war, wurde das Reaktionsgemisch auf 80° C abgekühlt, gebleicht und filtriert. Es resultierte eine hellgelbe, - schmalzige Masse mit einem Tropfpunkt von 26° C.

C. Ethylenglykol-diepoxi-stearat.

700 g des nach Vorschrift A erhaltenen Ölsäureesters mit einer Jodzahl von 86 wurden in einen 2 l-Rührkolben gegeben und auf 55° C erwärmt. Anschließend wurden 41 g 85 %-ige Ameisensäure zugegeben. Unter heftigem Rühren (ca. 500 U/min) wurden 213 g 50 %-ige Wasserstoffperoxid-Lösung über einen Tropftrichter zugegeben. Infolge der alsbald einsetzenden exothermen Reaktion stieg die Temperatur im Rührgefäß an, wobei durch Kühlung und zeitweilige Unterbrechung der Wasserstoffperoxid-Zugabe die Temperatur bei 60° C gehalten wurde. Nach Beendigung der Wasserstoffperoxid-Zugabe wurde noch weitere 6 Stunden bei 60° C gerührt. Anschließend erfolgte die Abtrennung der sauren, wässrigen Phase. Die organische Phase wurde anschließend mit 80 bis 90° C heißem Wasser gewaschen, bis die gewünschte Säurezahl erreicht war. Restliches Wasser wurde im Vakuum durch Trocknung bei 110° C entfernt.

Anschließend wurde mit einem Filterhilfsmittel filtriert. Nach dem Abkühlen erhielt man ein weißliches Wachs mit einem Schmelzpunkt von 55° C, einem Oxiran-Gehalt von 4,8 % und einer Jodzahl von 3.

D. Ethylenglykol-diepoxi-behenat.

Da hier ein Reaktionsprodukt mit einem Schmelzpunkt von über 60° C gebildet wird, wurde die Epoxidation in Gegenwart eines Lösemittels (Toluol; es lassen sich auch Benzinfraktionen mit Kochpunkten unter 140° C verwenden) durchgeführt.

900 g des gemäß Vorschrift B erhaltenen Ethylenglykolesters der Erucasäure mit einer Jodzahl von 72 wurden mit 233 g 50 %-iger Wasserstoffperoxid-Lösung, 45 g 85 %-iger Ameisensäure und 280 g Toluol in der in Beispiel 1 beschriebenen Weise umgesetzt. Das Lösemittel wurde nach der Waschung durch Destillation im Vakuum entfernt. Nach dem Trocknen und Filtrieren lag nach dem Abkühlen ein weißliches Wachs mit einem Schmelzpunkt von 65° C, einem Oxiran-Gehalt von 3,9 % und einer Jodzahl von 2,5 vor.

2. Herstellung einer Costabilisator-Kombination für Hart-PVC.

(Alle Angaben beziehen sich auf phr (per 100 Gew.-Teile Kunststoff).)

a) Rezeptur für den Außeneinsatz (Fensterrahmen)
2,0 - 2,5 fester BaCd-Komplexstabilisator
1,5 festes Epoxid nach Vorschrift C oder D
1,0 Gleitmittel
ggf. Chelator.

b) Allgemein anwendbares PVC-Profil für den Inneneinsatz
1,0 - 1,5 fester CaZn-Stabilisator sowie Costabilisatoren wie Polyol, ß-Diketon usw.
1 - 2 festes Epoxid nach Vorschrift C oder D
1,0 Gleitmittel.

Es zeigte sich bei der Herstellung dieser "one packs", daß das erfindungsgemäß zu verwendende feste Epoxid bei der Trockencompoundierung bzw. Granulierung mithalf, die trockenen Metallseifenstabilisatoren zu umhüllen und staubfrei zu machen.

3. Vergleich der erfindungsgemäß zu verwendenden festen Epoxide mit epoxidiertem Sojaöl in der PVC-Verarbeitung.

Es wurde der folgende Grundansatz hergestellt:
1000 g Suspensions-PVC, K-Wert 58
100 g Methacrylat-Butadien-Styrol-Schlagzähigkeits-Modifier (handelsüblich)
10 g Flow-Modifier auf Acrylat/Methacrylatbasis (handelsüblich)
6 g Calcium-behenat (Stabilisator)
1 g Zink-octoat (Stabilisator)
8 g hydriertes Ricinusöl
3 g Pentaerythrit-adipat-stearat (Molverhältnis 7 : 6 : 16)
3 g Benzoyl-stearoyl-methan
1 g Polyethylen-Wachs (Fp. ca. 130 °C)
5 g Epoxi-Sojaöl (Oxirangehalt mindestens 6 Gew.-%) bzw. festes Epoxid gemäß Vorschrift C oder D.

Die Rezepturen wurden im Henschel-Fluidmischer FM 10 auf ca. 110 °C hochgemischt (Werkzeugdrehzahl 3.600 U/min) und anschließend auf ca. 50 °C abgekühlt (Werkzeugdrehzahl 1.800 U/min).

Zur Durchführung der Stabilitätsprüfungen wurden von diesen Mischungen ca. 400 g auf einem Berstorff-Walzwerk 220 x 450 mm bei 170 °C Walzentemperatur zu Folien verarbeitet. Die Walzdauer betrug 3 Minuten nach der Plastizierung.

Die Stabilitätsprüfung bei einer Temperatur von 180 °C ergab für die Testmischungen vergleichbare Werte bei Anfangsfarbe und Early-color-Stabilität bei einer mit den erfindungsgemäß einzusetzenden festen Epoxiden erreichbaren leichten Verbesserung der Transparenz. Bei der Ermittlung der dynamischen Stabilität bei einer Temperatur von 200 °C ließ sich eine mit den festen Epoxiden der Erfindung erzielbare deutliche Verringerung der Spaltlast von 35,5 KN (mit Epoxi-Sojaöl) auf 33,3 KN (mit Ethylenglykol-diepoxi-stearat) bzw. von 39,6 KN (mit Epoxi-Sojaöl) auf 38,9 KN (mit Ethylenglykol-diepoxi behenat, jeweils unter Zusatz von 1,0 Methacrylat-Butadien-Styrol-Schlagzähigkeits-Modifier (handelsüblich) feststellen.

## Ansprüche

1. Verwendung von bei Umgebungstemperatur festen Epoxiden von Ethylenglykoldiestern technischer Mischungen ungesättigter Monocarbonsäuren mit hohem Gehalt an einfach ungesättigten $C_{18}$- bis $C_{22}$-Monocarbonsäuren als Stabilisatoren bzw. Costabilisatoren für Kunststoffe auf Basis von PVC oder PVC-Copolymerisaten, insbesondere Hart-PVC, dadurch gekennzeichnet, daß die Epoxide durch Epoxidation der Glykoldiester von Mischungen von Monocarbonsäuren der folgenden Zusammensetzung hergestellt sind:

a) mindestens 80 Gew.-% einer der Monocarbonsäuren aus der von einfach ungesättigten $C_{18}$- bis $C_{22}$-Fettsäuren gebildeten Gruppe, und

b) höchstens 20 Gew.-% Monocarbonsäuren, ausgewählt aus der von gesättigten, anderen einfach ungesättigten und mehr als einfach ungesättigten $C_{14}$-$C_{22}$-Fettsäuren gebildeten Gruppe, wobei der Gehalt an mehr als einfach ungesättigten Monocarbonsäuren höchstens 9 Gew.-% beträgt.

2. Verwendung nach Anspruch 1, dadurch gekennzeichnet, daß die Mischungen der Monocarbonsäuren mindestens 80 Gew.-% einer der Monocarbonsäuren aus der von Ölsäure und Erucasäure gebildeten Gruppe enthalten.

3. Verwendung nach Anspruch 1, dadurch gekennzeichnet, daß die Mischungen der Monocarbonsäuren höchstens 95 Gew.-% einer Monocarbonsäure der von Ölsäure und Erucasäure gebildeten Gruppe enthalten.

4. Verwendung nach einem der Ansprüche 1 bis 3, dadurch gekennzeichnet, daß die Mischungen der Monocarbonsäuren die folgende Zusammensetzung aufweisen:

a) 80 bis 92 Gew.-% Ölsäure,

b) Rest (auf 100 %) 4 - 10 Gew.-% gesättigte $C_{16}$/$C_{18}$-Fettsäuren, höchstens 7 Gew.-% Linolsäure sowie weniger als 1 Gew.-% andere $C_{14}$/$C_{22}$-Fettsäuren.

5. Verwendung nach einem der Ansprüche 1 bis 3, dadurch gekennzeichnet, daß die Mischungen der Monocarbonsäuren die folgende Zusammensetzung aufweisen:

a) 86 bis 92 Gew.-% Erucasäure,

b) Rest (auf 100 %) mindestens 2 Gew.-% gesättigte $C_{16}$/$C_{18}$-Fettsäuren, höchstens 9 Gew.-% Linolsäure und/oder Eikosensäure sowie weniger als 1 Gew.-% andere $C_{14}$/$C_{22}$-Fettsäuren.

6. Verwendung nach einem der Ansprüche 1 bis 4, dadurch gekennzeichnet, daß die Epoxide auf Basis von überwiegend Ethylenglykol-dioleat mindestens Oxirangehalte von 4,3 % aufweisen.

7. Verwendung nach einem der Ansprüche 1 bis 3 und 5, dadurch gekennzeichnet, daß die Epoxide auf Basis von überwiegend Ethylenglykol-dibehenat mindestens Oxirangehalte von 3,5 % aufweisen.

8. Verwendung nach einem der Ansprüche 1 bis 7, dadurch gekennzeichnet, daß man die Epoxide den Kunststoffen auf Basis von PVC oder PVC-Copolymerisaten, insbesondere Hart-PVC, in einer Menge von 0,01 bis 5 Gew.-Teilen, vorzugsweise 0,5 bis 2,5 Gew.-Teilen, auf 100 Gew.-Teile Kunststoff zusetzt.

9. Stabilisator- bzw. Costabilisator-Kombinationen für Kunststoffe auf Basis von PVC oder PVC-Copolymerisaten, insbesondere Hart-PVC, enthaltend die nach einem der Ansprüche 1 bis 7 zu verwendenden Epoxide oder Mischungen derselben mit Oxirangehalten von mindestens 3,6 % und Metallseifen, deren Metallkomponente aus der von Ba, Cd, Zn, Ca, Mg, Al, Pb und Sb gebildeten Gruppe sowie gegebenenfalls zugesetzte Pigmente enthalten.